# EUROPEAN PATENT APPLICATION

(11) **EP 3 457 254 A1**
(43) Date of publication of application: **20.03.2019**
(21) Application number: 18194924.9
(22) Date of filing: 17.09.2018
(51) Int. Cl.: G06F 3/01, G06F 3/0481, G06F 3/03, B60K 35/00, G06K 9/00, G02B 27/01, G06F 9/451

(54) **METHOD AND SYSTEM FOR DISPLAYING VIRTUAL REALITY INFORMATION IN A VEHICLE**

(30) Priority: 15.09.2017 ES 201731121
(71) Applicant: Seat, S.A., 08760 Martorell (ES)
(72) Inventor: MORENO PAREJO, Alejandro, 08760 Martorell, Barcelona (ES)
(74) Representative: Elzaburu S.L.P.

(57) **Abstract**

Method and associated system, to show virtual reality information in a vehicle (1), with the steps of i) capturing at least a first image (51) of a user's (2) environment, which coincides with a field of view (22) of the user (2), ii) determining a request to represent additional information in a virtual reality device (3), iii) generating virtual information (101) based on the additional information to be represented, iv) generating a virtual environment (6) of the user (2) by inserting the virtual information (101) in at least the first image (51), and vi) displaying the virtual environment (6) generated, in such a way that it is possible to easily modify the dashboard controls in their virtual format, achieving economic savings by eliminating the actuators or physical controls, as well as additional screens to represent them in the dashboard.

## Description

### OBJECT OF THE INVENTION

This patent application concerns a method for displaying virtual reality information in a vehicle under Claim 1, which incorporates significant innovations and advantages, together with a system for displaying virtual reality information in a vehicle under Claim 18.

### BACKGROUND OF THE INVENTION

Vehicles these days have cameras that capture images with information on the user's environment, both inside the passenger compartment and outside the vehicle. This information, present in the user's environment, can be processed in order to improve its presentation through a virtual reality device, so that different functionalities can be provided for the user. There is therefore a need for the user of a vehicle to perceive their environment in a filtered way, in which images, information and even virtual actuators are displayed, depending on their importance and priority at each moment of driving.

In this respect, in the state of the art, as reflected in document US20160093230, a flight simulator for aircraft is known, with a display device mounted on the user's head and a control surface. Images are generated from a virtual environment that comprises elements outside the cabin window. It comprises a device configured to detect the location of a user's hand within the user's field of view.

The document describes a series of physical actuators and an empty or partially empty dashboard, where some of the actuators are virtual. They work in such a way that, when the user wishes to use a physical or virtual actuator of the control panel, this will be captured by the controller, with the characteristics of the simulator being modified in the virtual image.

However, although in this document the user sees all the actuators and receives a feedback from the physical board in their virtual reality glasses, the information is always projected on the same area, and there is no option to modify the location where the information is represented.

Thus, and in view of all the above, it can be observed that there is still a need for a method and system for displaying virtual reality information in a vehicle, which would enable the controls or actuators of the dashboard to be easily modified virtually, in circumstances such as when the user acquires new functionalities, or depending on the context or driving situation and the internal and external variables of the vehicle, thus achieving economic savings by eliminating the actuators or physical controls, as well as additional screens where this information can be represented.

### DESCRIPTION OF THE INVENTION

This invention consists of a method and system for displaying virtual reality information in a vehicle, by means of a virtual reality device, in which images with relevant information are represented to the user, framed within the visual field itself. The virtual reality device will preferably consist of virtual reality glasses.

In this sense, in order to enjoy the advantages of this invention, the user has to wear virtual reality glasses, so that they can see the environment through the virtual reality images that is shown to them through this device. In other words, the user does not directly see the environment, but observes everything through, in this case, the virtual reality device or virtual reality glasses.

The virtual reality device preferably comprises at least one camera that captures the user's point of view, showing the user an image coming from at least one camera.

The method and system of this invention shows the user the image coming from at least one camera, but, before the content captured and/or recorded by at least one camera is presented, the system processes the image to provide a series of functionalities and features.

It can be observed that the feature which projects information on the virtual reality device itself allows a greater degree of freedom in terms of the presentation of images, the possibility of making them more visible and more versatile; meaning that the user is not limited to looking at a specific area of the vehicle, such as the rear-view mirror, and does therefore not have to divert their view from driving, on the other hand saving on screen infrastructure costs.

An alternative to the solution of this invention would be to project traditional images on the surfaces of the vehicle's passenger compartment, in particular on the dashboard, or to make hologram projections on spaces visible to the vehicle user. These projections do not depend on the position of the user with respect to the projection, as they are observed equally by all users of the vehicle - both the driver and the passengers. This option presents limitations with respect to this invention, in the sense that said projections must be made on predetermined spaces of the passenger compartment and reserved for such purpose, presenting less versatility and flexibility in terms of the design.

In essence, the method of this invention comprises the following steps:
- information acquisition by means of at least one camera implemented in the virtual reality device that captures the driver's field of view and/or a camera that captures the outside of the vehicle;
- receiving a request to represent additional information or priority information on the virtual reality device, where the additional information is different from the information captured by at least one camera captured on the virtual reality device;
- processing of the information recorded by at least one camera of the virtual reality device, classifying the image pixels according to whether they are from the passenger compartment, the exterior and/or additional objects;
- generating virtual information based on the additional information to be represented,
- generating an image based on the recorded information and the virtual information, so that the virtual information is displayed in a way that does not interfere with the recorded information;
- displaying of the generated information on the virtual reality device screen.

In this way, generating the image means defining the content of the additional information to be displayed, the position of the image to represent the additional information, the dimensions and/or transparencies of this virtual information... In this way, the additional information is presented in the most appropriate way based on driving conditions, the risk of accident risks, the number of simultaneous information being shown to the user, etc.

Depending on the type of embodiment, the method divides the captured images into three parts or layers in order to process the correct part or layer:
- the pixels of the image corresponding to the passenger compartment or interior of the vehicle, with the passenger compartment being understood as the interior panelling, the dashboard, seats, rear-view mirrors, etc., and other components forming and delimiting the interior of the passenger compartment of a vehicle,
- the pixels of the image corresponding to the exterior of the passenger compartment, meaning the exterior of the passenger compartment of the vehicle, including any element occurring behind the windows, windscreen and/or bezel of the vehicle, and
- the pixels of the image corresponding to additional objects such as packages, passengers or the user themselves.

In a preferred embodiment of the invention, and so that the system can provide maximum functionality, the virtual reality device comprises the plans, layout or distribution of the vehicle interior. It also comprises a system to exactly position and point the virtual reality device in space, in order to accurately display the controls or actuators in the right place by means of the virtual reality device.

Thus, this invention is related to a method that controls at least one piece of information by means of virtual reality, including a virtual reality device -usually virtual reality glasses but may be another equivalent system-, which comprises, in any case, at least one camera that captures the user's point of view. After passing through a processing phase in a processing unit, these captured images are displayed to the user, preferably via a screen on the virtual reality device.

The processing phase may include determining additional information to be displayed by the virtual reality device, and also detecting an input, which can be a request made by the user, or also a request from a control unit. Following the processing phase, there may be a phase comprising the representation of additional information in the environment, captured based on the input, and in this sense, the position, dimension, visual properties, etc. of the information represented varies depending on the input.

The processing unit can detect the need to project a piece of information, either through an incoming signal that must be represented, for example an incoming call, by an action from the user on an actuator (for example if the user presses the physical button or the actuator or virtual control of the music), by a gesture associated with the projection of a certain piece of information (for example if a fist comprises displaying a navigation signal), or by voice.

Thus, and specifically, the basic embodiment of the invention comprises a method for displaying virtual reality information in a vehicle, where a virtual reality device is used by a user in the interior of the vehicle, where the method comprises the following steps:
i) capturing at least a first image of a user's environment, where at least the first image captured matches the user's field of view,
ii) determining a request to represent additional information on the virtual reality device,
iii) generating virtual information based on the additional information to be represented,
iv) generating a virtual user environment, where the virtual environment comprises inserting the virtual information in at least one first image, and
v) displaying the virtual environment generated by the virtual reality device.

In this sense, the environment is understood as the physical space surrounding the user. User means the person who is physically inside the passenger compartment of the vehicle and who carries the virtual reality device. A virtual reality device is a device capable of projecting images of an environment, giving the user the feeling that they are in that environment. A virtual environment is a set of images that recreate an environment around a user carrying a virtual reality device. Field of view means a set of images observed by the user for a given direction of observation.

As described, the invention has the advantage of displaying virtual or additional information in a virtual environment, through a virtual reality device, combining this virtual information with real-world information. This information -both virtual and real-world- can be represented in the entire visual space, without being limited to one screen.

In addition to the reduction in costs gained from not showing the information on physical screens, there is versatility in terms of the content of the option presented, as well as in terms of the position in which the information is presented. In this way, the information can be changed quickly. Thus, if a user acquires a new system, they will be able to update the appearance, or the aesthetics of the control panel.

Specifically, the additional information projected on the virtual reality device consists mainly of information related to contexts such as navigation, radio, telephone, vehicle parameters, actuators to modify vehicle parameters, etc. Thus, if a call is received by the user, the additional information would be an indicator of the incoming call with at least one virtual actuator to answer the call. Another example could be the user performing a certain action to activate the vehicle's climate control parameters, and in this case the actuators would correspond to the additional information for managing the climate control settings.

According to another aspect of the invention, the step comprising the generation of virtual information comprises defining at least one visual property of the virtual information to be displayed on the virtual reality device. At least one visual property of virtual information comprises altering a brightness, colour, luminosity, contrast and/or saturation of the information received. In this way, the appearance of the virtual information can be specified based on the additional information, the first image captured, the priority of the additional information and/or the user's preferences.

On the other hand, the step comprising the generation of virtual information comprises defining the content of the virtual information to be displayed on the virtual reality device. Where defining the content of the virtual information comprises selecting the information to be represented, or selecting text, or an actuator, etc... based on a degree of priority, where the degree of priority is preferably determined by the vehicle.

In this way the content of the virtual information presented can be customised according to the needs or preferences previously established for a generic user.

In a preferred embodiment of the invention, the step of generating a virtual environment comprises superimposing the virtual information generated on at least one first image captured. In this way, on the image of their field of view, the user can see other information of interest or information relevant to driving. It is therefore a direct replacement of at least one area of the first image captured by the information to be represented, within the virtual environment generated.

According to another aspect of the invention, superimposing the virtual information generated on at least one first image captured comprises establishing the transparency of the virtual information superimposed. This transparency implies being able to display virtual information while still representing the real image of the user's environment at the same point, thus allowing the user to see the complete environment that surrounds them, as well as the additional information to be displayed on the virtual reality device.

Transparency can be established simply, with the colour of each pixel of the first image being represented as a mixture of the colour of the virtual information to be represented, and the colour of the first image, or representation of reality. In a preferred embodiment, the user can change the transparency and colour of the projected virtual information so that he can customise it to his liking.

Generally speaking, altering at least one visual property of the first image may allow the virtual information to be displayed in a more prominent and visually accessible way for the user.
Advantageously, superimposing the virtual information generated on at least one first image captured comprises defining a dimension for the superimposed virtual information, so that the user, or the processing unit, can vary the degree of visibility and accessibility to the virtual information, being able to establish definitions based on a priority and/or the importance of the additional information, or its size or dimension within the generated virtual environment.

According to yet another aspect of the invention, the step of generating a virtual environment comprises defining the position of the virtual information to be displayed on the virtual reality device, in such a way that the invention determines the position at which the virtual information is projected into the field of view of the virtual reality glasses based on a priority and/or the importance of the additional information. Additionally, the position of the additional information can be customised by the user, as explained below.

Thus, and in summary, the method of this invention determines the order, shape, position and/or size of each virtual information independently. For example, in the case of an actuator, these variables are decided for each one of the actuators and at the moment they are displayed by the virtual reality device.

On the other hand, and in a particular embodiment of the invention, virtual information comprises a preset position. This preset position is located in a certain area of the user's field of view, so that each additional piece of information occupies a certain preset space within the virtual environment. Thus, the user knows where to look to review or act on this virtual information.

More specifically, the method comprises a step in which the user determines an order, where defining a virtual information position comprises inserting the virtual information in a position requested by the user. In this way, the user can choose where they would like to have this virtual information in their field of view and can adapt the virtual information representation to the user's specific needs.

According to another aspect of the invention, the aforementioned order comprises a preset gesture captured in at least one first image, in such a way that the position of the virtual information is substantially equal to the position of the preset gesture captured in the user's field of view, which results in greater accessibility for the user to the information and/or the actuators.
Specifically, this information can be represented by default in a certain area of the user's field of view, which supports the virtual reality device. Thus, the user can request the information to be moved and represented in the requested area. Thus, the user can make a certain gesture, such as extending a flat hand, to indicate that the image of the virtual information is projected just above the hand.

In a preferred embodiment of the invention, the order comprises at least one instruction, in such a way that the position of the virtual information is displaced by at least one instruction, where at least one instruction comprises a voice instruction and/or an instruction on a touch surface and/or an instruction through gestures. In this way, the user can choose where to have the information through various types of actions, according to their comfort, and in order for it to interfere less with his driving.

Therefore, the position of the virtual information is changed through gestures, detected by a camera, or by action on an actuator or controller, for example a touch surface, on the virtual reality device itself. Advantageously, the user can make gestures with their hand, to raise or lower it, to move it to the left or right, to move the virtual information image. The user can slide the image on a touch surface of the virtual reality device itself, indicating its progressive movement. Advantageously, the detection of the order and, therefore, of the gesture to define the position of the virtual information, is detected by means of the same camera that captures at least one first image, taking advantage of the fact that the camera that captures at least one first image coincides with the field of view of the user carrying the virtual reality device.

If the input or instruction is a request from the user, the user can directly request the area of the field of view to represent the image, without it being displayed in a predetermined area.

In a particular embodiment of the invention, the method comprises a step of determining a critical driving situation, where the step of generating a piece of virtual information and/or the step of generating a virtual environment is additionally based on the critical driving situation determined.

The invention therefore refers to a method, and an associated system, which makes it possible to avoid collisions between the user's vehicle and its surroundings due to a projection of virtual information in an area that hinders the visualization of the environment, thus making it difficult to drive the vehicle.

Thus, when a risk of collision is detected, additional information is projected onto the virtual reality device, preferably virtual reality glasses, in conditions that are not likely to make driving difficult or impossible. In addition, the virtual information can be information to avoid collision, which results in increased safety for the occupants of the vehicle. As an example, the virtual information projected consists mainly of images captured by cameras outside the vehicle, in such a way that the driver can be shown a zoomed image of the rear area, side, or front areas of the vehicle, when there a risk of collision is detected.

A critical driving situation is understood to be an environmental event, an action taken by the driver, an action of a third vehicle or pedestrian with respect to the vehicle... where the method determines that this information is priority and that it must be shown to the driver of the vehicle.

According to another aspect of the invention, at least the first image comprises at least a first segment, where the method comprises a step of classifying at least a first segment of at least a first segment of at least a first image inside the vehicle, outside the vehicle, and additional object of the vehicle, where the step of generating virtual information and/or the step of generating a virtual environment are additionally based on the classification of at least a first segment of at least the first image.

Thus, the method of this invention divides the images into three parts, in order to be able to represent the additional information by superimposing it on non-critical zones of the captured environment. Depending on the level of priority or collision risk detected, additional information can be displayed selectively by superimposing or applying transparency over the pixels corresponding to the passenger compartment, the pixels corresponding to the exterior, and/or the pixels corresponding to additional objects such as packages, passengers or the user themselves. Note that, in its memory unit, the system has exact drawings of the interior or exterior of the vehicle, or of an object or building, if the virtual reality device is in another environment.

Specifically, the virtual reality device camera captures images of its environment and the distance to each part of the image in that environment. The virtual reality device knows where it is positioned and the distance from it to each point in the passenger compartment.

On the other hand, the method of the invention comprises an additional step of determining at least one window area in at least one captured image, where the step of determining at least one window area comprises recognizing at least one preset geometric shape by means of image processing and/or determining at least one marker of at least one image, where the marker comprises a preset colour and/or compares at least one actual vector with at least one theoretical vector.

Based on the above, it must be specified that at least one segment is classified as outside of the vehicle if at least one segment is arranged in at least one window area in at least one image.

Furthermore, at least one segment is classified as an inside of the vehicle if the actual vector of at least one segment is substantially the same as the theoretical vector, where both the angle and the modules of the vectors coincide.

On the other hand, at least one segment is classified as an additional object of the vehicle if the actual vector module of at least one segment is smaller than the theoretical vector module.

In conclusion, after this image analysis, the virtual reality device separates the image being captured into three parts: the pixels corresponding to the passenger compartment; the pixels corresponding to additional objects not belonging to the passenger compartment; and the pixels corresponding to the exterior of the vehicle, i.e. those above the window.

More specifically, inserting the generated virtual information into at least one first image captured comprises superimposing the virtual information onto the first segment of the inside of the vehicle and/or the first segment of the outside of the vehicle and/or the first additional object segment of the vehicle. This shows the type of virtual information represented in the area that is most convenient, depending on the driving characteristics, the driving risk, the type of virtual information to be represented, etc.

According to a preferred embodiment of the invention, virtual information comprises at least one virtual actuator, where virtual actuator is to be understood as a button, push button or command, which sends instructions to a processing unit of the vehicle.

In this way, these virtual actuators can be easily edited and updated, and vehicle parameters can be modified by placing them in the most optimal or preferred area of the user's field of view. The advantages are contrasted with the defined and unchangeable physical position of the actuators, screens or other control elements in the vehicle.

An additional advantage of these virtual actuators over the physical buttons is that they can be placed anywhere, without having any technical feasibility problems. No matter how deep the surface, the button has no mechanism behind it.

Thus, the system configured to execute the method of this invention is capable of displaying virtual actuators in the form of touch surfaces on a surface corresponding to the interior of the passenger compartment or on the 3D space, in the form of holographic actuators. The buttons can be changed quickly, for example, if a user acquires a new system they can be updated. Therefore, the ability of the method of this invention to edit both the visual appearance, position, size and content or function of such virtual actuators is emphasised. At present, manufacturers have to reserve space for the physical buttons, although in the event that the user does not acquire this functionality at the time of purchasing the vehicle, they must put some kind of lid on them to cover the space. This problem could be solved with this invention.

In addition, and advantageously, virtual actuators can also be modified according to the context; with context being understood as the set of variables of the vehicle and its environment. Such virtual actuators can appear and disappear depending on various contextual factors. For example, at higher vehicle speeds, they may increase in size to make it easier to press them quickly and decrease the possibility of distraction. Another example would be the inclusion of a button to open the boot. When the boot is closed, the button shows the function of opening the boot, but when it is open, the button shows the function of closing it.

According to another aspect of the invention, the method comprises a step of acting on at least one virtual actuator, which in turn comprises determining a position of at least one hand of the user in the field of view, associating the position of at least one hand of the user determined with the position of at least one virtual actuator, determining a coincidence between the position of at least one hand of the user determined and the position of at least one virtual actuator.

In this way, it is possible to communicate with a vehicle processing unit, in such a way that a function can be activated or deactivated by the vehicle, or a parameter of the vehicle can be increased or decreased.

Consequently, the user can also control or interact with the information represented. Thus, the user could touch the "air", i.e. the empty space in front of them, where the virtual environment is represented. In this virtual environment, at least one virtual actuator is available to perform actions or modify vehicle parameters. The step of determining the position of the user's hand could be performed by the camera that captures at least one first image, facilitating the step of associating the position of at least one of the user's hands with the position of the virtual actuator in the virtual environment, since the field of view is the same. In order to improve the accuracy of the step for determining if the position of the hand and that of the virtual actuator position coincide, a system capable of determining the distance to all objects, such as a LIDAR (Light Detection and Ranging) is used. This system can be the same as the one used to sort the pixels or segments of the first image.

More particularly, in the case that there is a coincidence between the position of at least one hand and the virtual actuator has been determined, acting on at least one virtual actuator comprises generating at least one response to the user, in such a way that the user obtains a perceptible signal that transmits information. At least one response preferably comprises modifying at least one visual property of the virtual information or producing another type of signal such as a seat vibration, or another type of acoustic or visual signal, such as a change in the shape or colour of the content represented on the virtual reality device.

Also object of the invention is a system for displaying virtual reality information in a motor vehicle, where the system comprises a virtual reality device, where the virtual reality device comprises at least one screen, at least one first camera, where at least one first camera is configured to capture at least one first image, where at least the first image matches the user's field of view, at least one processing unit, where at least one processing unit is configured to determine a request to represent information on the virtual reality device, receive an instruction, generate virtual information, and generate a virtual user environment.

It is therefore understood that the system for displaying virtual reality information in a motor vehicle comprises the components, and at least one information processing device comprising means of implementing the method described above.

The virtual reality device, preferably virtual reality glasses, can include a high-resolution camera, and high quality autofocus systems, such as a night and/or infrared camera, and also a system capable of determining the distance to all objects in the image, such as a LIDAR.

According to another aspect of the invention, the system comprises at least one position detection means, where the position detection means is configured to determine a position of the virtual reality device in the vehicle. In this way, the position and direction of the virtual reality device inside the vehicle can be known, which, among other things, allows the first image to be classified into layers, sections or segments, and also determines the field of view that the user perceives at any given moment. As an example, the positioning system can be comprised of at least one camera, at least one triangulation positioning system, position capture of known elements in the environment, etc.

In addition, and to aid the focus of the direction, the virtual reality device can be equipped with an accelerometer and gyroscopes. On the other hand, the image of the virtual environment can be represented either on a screen of the device or on a projection on a lens, in the case of virtual reality glasses.

The attached drawings show, as an example but not limited to, a method and system for displaying virtual reality information in a vehicle, constituted in accordance with the invention. Other characteristics and advantages of this method and system for displaying virtual reality information in a vehicle, which is the object of this invention, will be evident from the description of a preferred, but not exclusive, embodiment, which is illustrated as a non-exclusive example in the attached drawings, in which:

### BRIEF DESCRIPTION OF THE DRAWINGS

- Figure 1.-: Perspective view of the passenger compartment of a vehicle, in accordance with this invention.
- Figure 2.-: First-person view of a user's field of view from the driver's position in the passenger compartment of a vehicle, in accordance with this invention.
- Figure 3.-: Perspective view of a virtual reality device, in accordance with this invention.
- Figure 4A.-: Perspective view of a virtual reality device in a first position, in accordance with this invention.
- Figure 4B.-: Perspective view of a virtual reality device in a second position, in accordance with this invention.
- Figure 5A.-: Perspective view of the first row of seats in the passenger compartment of a vehicle with two users wearing their respective virtual reality devices, in accordance with this invention.
- Figure 5B.-: Perspective view of the driver's field of view in the passenger compartment of a vehicle, in accordance with this invention.
- Figure 6A.-: Perspective view of the virtual environment observed by the driver in the passenger compartment of a vehicle through the virtual reality device, with virtual information in the first position of the field of view, in accordance with this invention.
- Figure 6B.-: Perspective view of the virtual environment observed by the driver in the passenger compartment of a vehicle through the virtual reality device, after a first turn of the driver's head, with virtual information even in the first position of the field of view, in accordance with this invention.
- Figure 6C.-: Perspective view of the virtual environment observed by the driver in the passenger compartment of a vehicle through the virtual reality device, after a second turn of the driver's head, without virtual information being displayed, in accordance with this invention.
- Figure 7A.-: Perspective view of the virtual environment observed by the driver in the passenger compartment of a vehicle through the virtual reality device, with virtual information in the first position of the field of view, in accordance with this invention.
- Figure 7B.-: Perspective view of the virtual environment observed by the driver in the passenger compartment of a vehicle through the virtual reality device, with virtual information in a second position of the field of view, in accordance with this invention.
- Figure 7C.-: Perspective view of the virtual environment observed by the driver in the passenger compartment of a vehicle through the virtual reality device, with virtual information in a second position of the field of view, and with other virtual information in a third position of the field of view, in accordance with this invention.

### DESCRIPTION OF A PREFERRED EMBODIMENT

In view of the above-mentioned figures and in accordance with the numbering adopted, an example of the preferred embodiment of the invention can be observed in them, which comprises the parts and elements indicated and described in detail below.

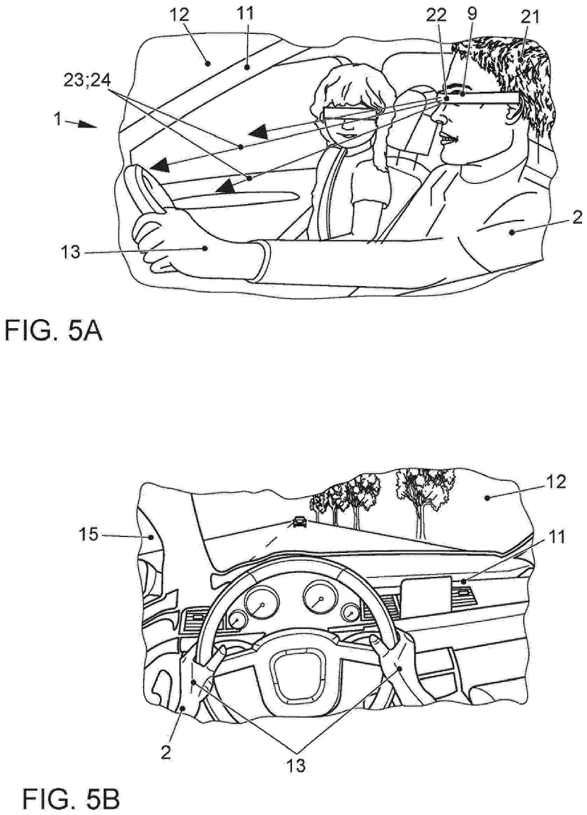

As can be seen in Figure 5A, the system and method of this invention is based on projecting virtual reality information by means of a virtual reality device 3. The virtual reality device 3 is preferably located on the head 21 of the user 2, both a driver and a passenger, when they are inside a vehicle 1.

By way of summary, in a preferred embodiment, the method of this invention carries out the following actions:
- capturing of at least one first image 51 by means of at least one first camera 31, where at least one image 5 coincides with the user's field of view 22,
- receiving in the virtual reality device 3 of a request to represent additional information in the virtual reality device, where the additional information can be a second image captured by an external camera, an actuator that allows action to be taken on a vehicle parameter 1, etc.
- once the virtual information to be represented has been received, generation of virtual information 101, which consists of defining the way in which the additional information is represented in a virtual environment 6,
- generation of user 2's virtual environment 6, where virtual environment 6 comprises the first image 51 that matches the visual field 22 and the virtual information 101, in such a way that additional information is displayed in user 2's field of view 22, and
- showing of the virtual environment 6 generated by the virtual reality device 3.

It should be noted that, in a first variant, the virtual environment 6 would be displayed on the screen 37 of a virtual reality device or glasses 3, and in a second variant it would be displayed on the device lens itself or on the virtual reality glasses 3.

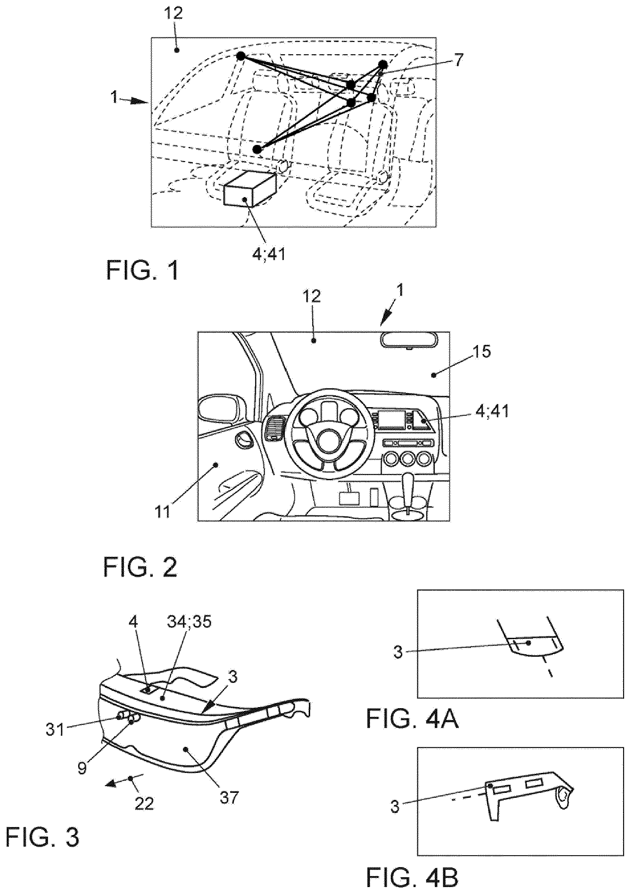

Figure 1 illustrates the passenger compartment of a vehicle 1, with a processing unit 4 and a memory unit 41, preferably located under the dashboard. There is also a plurality of position detection media 7 of the virtual reality device 3 in vehicle 1. An example for positioning the virtual reality device 3 is by means of transceivers, for example an infrared or electromagnetic wave transceiver. In this way, by means of a triangulation process and by knowing the emission and response time of these waves with devices located in known locations of vehicle 1, its position can be determined precisely.

Figure 2 shows a first-person view of the field of view 22 of a user 2 from the driver's position in the passenger compartment of a vehicle 1. It shows the areas of field of view 22, classified as interior 11, exterior 12 and the window area 15. The exterior area 12 of the vehicle is also highlighted, preferably corresponding to the window area 15. An example location of the processing unit 4, usually next to the memory unit 41, is also shown.

Figure 3 illustrates a perspective view of a virtual reality device 3. This virtual reality device 3 is preferably virtual reality glasses. Virtual reality glasses preferably comprise a first camera 31 to capture at least one first image 51, at least one distance sensor 9, where at least one distance sensor 9 is configured to obtain at least one distance between the user 2 and the objects in the environment, an accelerometer 34 and a gyroscope 35 to determine the position of the virtual reality device 3 in vehicle 1, as well as the processing unit 4. Thus, the virtual reality device 3 knows where it is positioned, and knows the distance to each point in the passenger compartment of vehicle 1. In addition, a screen 37 allows user 2 to see the generated virtual environment 6.

Figure 4A shows, for illustrative purposes, a virtual reality device 3 in the first position, which corresponds to a larger view of the virtual reality glasses. Figure 4B shows, for illustrative purposes, a virtual reality device 3 in a second position, which corresponds to a side view of the virtual reality glasses. In order to position the virtual reality device 3 in the environment, markings or markers can be placed on the glasses that serve as reference points. In figure 4A the markings are arranged in the upper part of the frame. In figure 4B the markings are arranged in the lateral area of the rods. The position and direction of these markings is determined by means of cameras placed in the interior of the vehicle, thus positioning the virtual reality device 3.

According to another aspect of the invention, the method of this invention classifies at least a first segment 511 or pixel of the first 51 images obtained by the first camera 31. At least a first segment 511 is classified according to:
- interior 11 of vehicle 1,
- exterior 12 of vehicle 1, and
- additional object 13, of the vehicle.

A segment is understood as a portion or part of an image. An image can be subdivided into portions or segments by image processing, dividing the image by colours, volumes, geometries, contours... thus obtaining the plurality of segments that make up the image. Alternatively, the image can be subdivided by pixel or equivalent. Thus, the term segment of an image is equivalent to a pixel of the same image, and these terms can be used interchangeably, and both interpreted under the same meaning.

Thus, the classification of the first 511 segments is based on the location of at least one element of the user environment 2 with respect to the virtual reality device 3, where, in addition, the method comprises the steps of:
a) obtaining at least one real vector 23, where at least one real vector 23 comprises a module and a direction between the virtual reality device 3 and at least one element of the user environment 2,
b) determining a position of virtual reality 3 in vehicle 1,
c) assigning at least one real vector 23 to at least one first segment 511, and
d) comparing at least one real vector 23 with at least one theoretical vector 24, where at least one theoretical vector 24 is previously known.

Figure 5A shows a perspective view of the first row of seats in the passenger compartment of a vehicle 1 with two users 2 wearing their respective virtual reality devices 3. It can be seen schematically how the virtual reality device 3 captures first images 51 of the environment, coinciding with the field of view 22 of the user 2. In addition, at least one distance sensor 9 captures at least one module and one direction between the virtual reality device 3 and the elements in the user environment 2, in such a way that a plurality of actual vectors is defined 23. Each first segment 511 of the first image 51 has at least one real vector 23 associated with it, in such a way that a relative position is known for each first segment 511 with the user 2.

In addition, at least one position detection device 7 allows the position of the virtual reality device 3 in the interior of the vehicle 1 to be known. Knowing the position is essential for locating the user 2 on a previously known three-dimensional map of the vehicle 1. In this way, a plurality of theoretical vectors 24 will be known, which indicate the relative position between the objects located in the environment of the user 2 and the user 2 themselves. A comparison between the plurality of theoretical vectors 24 and the plurality of real vectors 23 will allow us to classify the plurality of first segments 511 or additional objects of the first image 51, thus being able to generate a virtual environment 6 modified to the specific needs of the user 2.

In order to determine the first segments 511 of the first image 51 representing the exterior 12 of the vehicle 1, at least one window area 15 is determined in at least one captured first image 51. This is based on recognising at least one preset geometric shape by means of image processing and/or determining at least one marker from at least one first image 51, where the marker comprises a preset colour, and/or comparing at least one real vector 23 with at least one theoretical vector 24. Note that the window area 15 corresponds to the windscreen, or any glazed or transparent surface of the vehicle 1. Thus, at least a first segment 511 is classified as the exterior 12 the vehicle 1 if at least a first segment 511 is arranged in at least one window area 15 in at least one first image 51.

Image 5B shows a first virtual environment 6 of the user 2 generated. It should be noted that this first virtual environment 6 does not present any modification with respect to the real environment of user 2. Thus, the field of view 22 of the driver user 2 can be seen in the passenger compartment of the vehicle 1, where the different areas of the field of view 22, classified as pixels or first 511 segments corresponding to the interior 11 of the vehicle 1 or passenger compartment, for example a dashboard of the vehicle 1, can be seen; the pixels corresponding to additional objects 13 not belonging to the interior 11 of the vehicle 1, in this case the hands 25 of the driver user 2, or passenger compartment; and the pixels corresponding to the exterior 12 of vehicle 1, i.e. the part of the first image 51 behind the windscreen.

It should be noted that this invention classifies the pixels of the first image 51 according to at least the following layers of the exterior 12, interior 11 and additional object 13 of vehicle 1. The exterior 12 is equivalent to the pixels captured that are positioned in the window 15 or glass area. Therefore, all of the content that is captured and, according to the 3D arrangement, indicates that it is glass or the window area 15, equivalent to the exterior 12, as long as the distance of that pixel is equal to the actual distance. For the interior 11 of the vehicle 1, or passenger compartment, the actual distance must correspond to the theoretical distance according to the 3D arrangement. For the additional object 13, not related to the interior 11 of the vehicle 1, or passenger compartment, the actual distance must be less than the theoretical distance according to the 3D arrangement.

Starting from an environment like the one shown in figure 2, where this user 2 environment is captured by means of the first camera 31, a request is detected to represent additional information on the virtual reality device 3. Additional information can be an image captured by a second camera, an actuator to modify a parameter of the vehicle 1, an incoming call, etc.

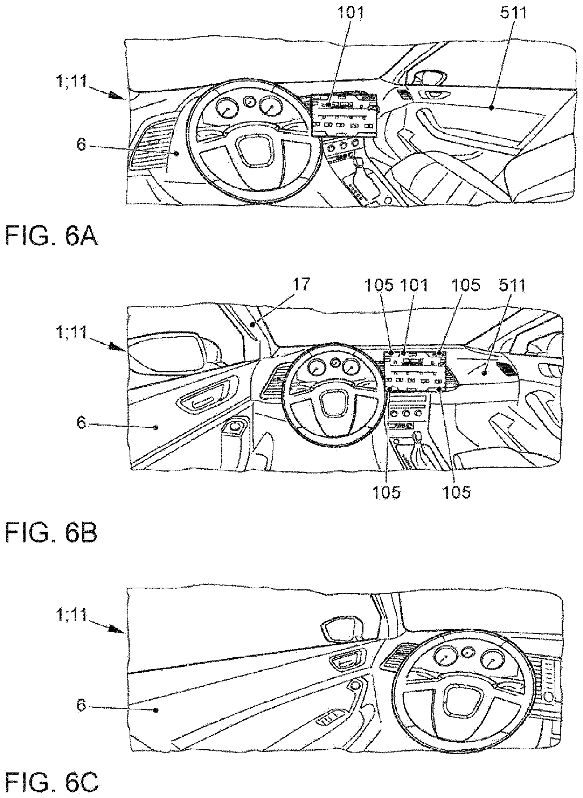

Figure 6A shows, for illustrative purposes, a perspective view of the virtual environment 6 observed by the driver inside the interior 11 of passenger compartment of the vehicle 1 through the virtual reality device 3, with virtual information 101 in a first position of the field of view 22 approximate to the central space of the vehicle 1 dashboard, in accordance with this invention.

Specifically, the information from the HMI (Human Machine Interface) is definitive, the point of action where the user 2 enters in contact with the vehicle 1 can be projected "on demand", in such a way that it is not always visible, thus reducing distractions. For example, determining a request to represent additional information could be activated by pressing a button on the steering wheel, making a gesture, or even by voice.

In the step of generating the virtual information 101 the shape, appearance and other factors are determined, with which the additional information is presented in the virtual environment. Thus, generating virtual information 101 comprises defining at least one visual property of the virtual information 101, where the visual property can be a colour, brightness, contrast, or another graphic aspect with which additional information is represented. In addition to the visual property, it also comprises defining the content of the virtual information 101, in such a way that the text to be displayed to the user 2 and/or the actuators and the graphics to be represented in virtual environment 6 are selected. As an example, as shown in Figure 6A, virtual information 101 consists of a text and a plurality of virtual actuators; one in each corner of the virtual information 101. Each text, graphic and/or actuator will have its own visual properties, depending on the specific needs.

Thus, the virtual information 101 can be superimposed on at least one first image 51 captured, in such a way that one pixel or first segment 511 of the first image 51 will be replaced by a pixel representative of the virtual information 101 generated. Additionally, the virtual information 101 can be superimposed by establishing a transparency of either the virtual information 101 or the first image 51, in such a way that it can be observed through the superimposed virtual information 101. Transparency can be applied by mixing the colour of each pixel, combining the colour of the virtual information 101 that you want to represent with the colour of what is behind it.

In addition to the visual property and content of the virtual information 51, the step of generating virtual information 101 comprises defining a dimension of virtual information 101 represented in the virtual environment 6. In figure 6A, the virtual information 51 of a first size has been generated. This size could be different depending on, for example, the speed at which the vehicle is travelling or a critical driving situation, thus reducing the time required for the user to see and understand the content of the virtual information 101, thus reducing the risk of a collision or distraction.

According to another aspect of the invention, defining a virtual information 101 comprises establishing a position for the virtual information 101 in the virtual environment 6. This position can be a preset position, meaning that each additional information has a preset position in the interior 11 of the vehicle 1. For example, in figure 6A, information related to the music that is playing in the vehicle 1 will be represented by default in the central area of the dashboard of the vehicle 1.

Figure 6B illustrates a perspective view of the virtual environment 6 that is observed by the driver user 2 in the passenger compartment of a vehicle 1 via the virtual reality device 3, after a first turn of the driver's head, with a second image 52 of virtual information 101 even at a first position in the field of view 22 near the center of the vehicle's dashboard. It is noted that the position of the information 101 is the same preset position shown in figure 6A.

Figure 6C shows an illustrative perspective view of the virtual environment 6 observed by the user driver 2 in the passenger compartment of the vehicle 1 via the virtual reality device 3 after a second turn of the driver's head. As the preset position of virtual information 101 is not within the user's 2 field of view 22, the virtual information 101 is not represented.

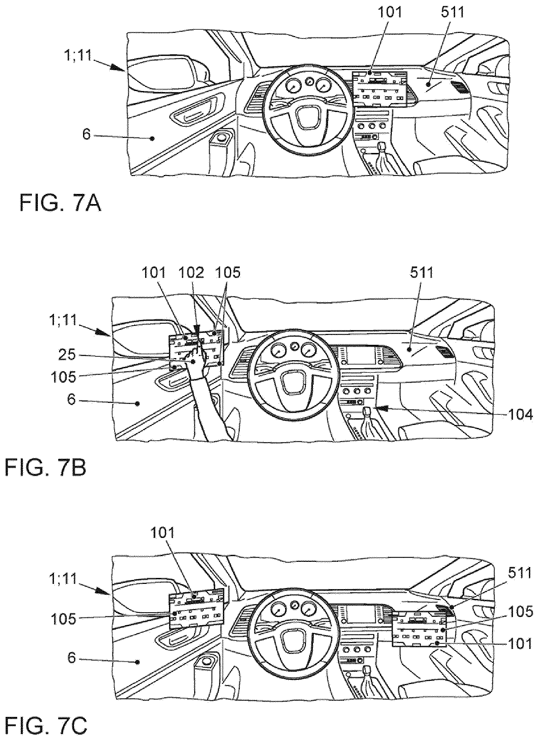

In figure 7A, the same situation as that shown in figure 6A can be observed. Thus, the virtual information 101 is represented in a preset area; in this case in the central part of the dashboard. This figure shows that the system, or processing unit 4, shows the information it considers interesting and/or necessary for the user 2 in the position it considers most appropriate. According to a preferred embodiment of this invention, the position of the virtual information 101 can be modified by the user 2.

Figure 7B shows, for illustrative purposes, a perspective view of the virtual environment 6 observed by the driver user 2 in the passenger compartment of a vehicle 1 through the virtual reality device 3, with virtual information 101 in a second position of the approximate field of view 22 at the base of the left exterior mirror of the vehicle 1 on which an order from the user 2 is being carried out.

The virtual information 101 is moved from the first position to the second position because an order 102 has been determined, in such a way that the position of the virtual information 101 has been determined at the will of the user 2. To do this, the user performs a preset gesture, such as making a flat hand 25. This gesture is received by the processing unit 4, in such a way that the position of the virtual information 101 in the virtual environment is changed, specifically above the flat hand 25 detected in the field of view 22.

According to another type of embodiment, the position of the virtual information 101 can be progressively modified by means of different instructions or commands to move the image from the first position to the second position. For example, the instructions can be by voice, by moving a finger on a touch surface, by gestures, etc. More in detail, the same first camera 31 that captures the first image captures the gesture. The benefit is that the first camera 31 has the same field of view 22 as the user 2. If the preset gesture is shifted in the field of view 22, the position of the virtual information 101 is adapted to the position of the preset gesture, e.g. a preset gesture of a hand 25. Thus, the virtual information 101 moves over the virtual environment 6 following the movement of the hand 25 of the user 2.

Properties of the representation of virtual information 101 such as those mentioned above (position, size, content, etc.) can be modified according to a specific critical driving situation. A critical driving situation can be an invasion of a lane by the vehicle 1, an imminent collision or contact situation between the vehicle 1 and a third vehicle, a third vehicle located in the blind spot of the vehicle 1 and not seen by the driver, a pedestrian close to the vehicle 1, etc.

Any of these critical driving situations can be detected by means of vehicle sensors, such as distance sensors, presence sensors, sensors that parameterize the trajectory of the vehicle 1, etc. When a critical driving situation is detected, it will be taken into account where and how the virtual information 101 is represented within the virtual environment 6.

It has been previously commented that the method of this invention classifies the plurality of first segments 511 or pixels of the first image 51 in the interior 11, the exterior 12 and the additional object 13 of vehicle 1. Thus, as shown in figure 7C, virtual information 101 is superimposed on the first segment 511 of the interior 11 of the vehicle 1 and/or on the first segment 511 of the exterior 12 of the vehicle 1 and/or on the first segment 511 of the additional object 13 of the vehicle 1. Specifically, as shown in figure 7C, the virtual information 101 shown to the right of the first image 51 is superimposed only on the first 511 segments of the interior 11 of the vehicle 1. In addition, the virtual information 101 shown to the left of the first image 51 is partially superimposed on the first 511 segments of the exterior 12 of the vehicle 1, and on the first 511 segments of the inside 11 of the vehicle 1. Thus, depending on the information type and its priority when presented, the type of the first pixels 511 of the first image 51 over which the virtual information 101 is superimposed can be selectively chosen. For example, in the case of a highly critical situation, the virtual information 101 may be superimposed on the first 511 segments of both the interior 11, the exterior 12 the and additional object 13 of the vehicle 1.

More particularly, the virtual information 101 comprises at least one virtual actuator 105. Said virtual actuator 105 can be a touch or holographic surface in a virtual environment 6. As shown in figure 7B, the user 2 takes action on the virtual actuator 105. To detect this action, the position of the user's hand 25 needs to be determined, preferably by means of the first camera 31 that captures the field of view 22. The determined hand 25 position is then associated with the position of the virtual actuator 105 in the virtual environment 6 in order to determine a coincidence between the two positions. To improve the accuracy, the information from the distance sensor 32 can be used to more accurately know the distance from the hand 2 to the virtual reality device 3.

Once the coincidence and, therefore, the willingness of the user 2 to take action on the virtual actuator 105 has been determined, an order is transmitted to the processing unit 4, in such a way that the function represented by the virtual actuator 105 is acted upon. In addition and in order to improve the user's 2 appreciation that the virtual actuator 105 has been actuated, a response can be generated to the user 2, such as modifying some visual property of the virtual information 101, sending a vibration to the vehicle 1 seat.

The details, shapes, dimensions and other accessory elements, as well as the components used in the implementation of the method and system for displaying virtual reality information in a vehicle may be conveniently replaced by others that are technically equivalent and do not depart from the essential nature of the invention or the scope defined by the claims included in the following list.

### List of numerical references:

- 1: vehicle
- 11: interior
- 12: exterior
- 13: additional object
- 15: window area
- 2: user
- 21: head
- 22: field of view
- 23: real vector
- 24: theoretical vector
- 25: hand
- 3: virtual reality device
- 31: first camera
- 32: sensor
- 34: accelerometer
- 35: gyroscope
- 37: screen
- 4: processing unit
- 41: memory unit
- 51: first image
- 511: first segment
- 6: virtual environment
- 7: position detection device
- 9: distance sensor
- 101: virtual information
- 102: command
- 105: virtual actuator

## Claims

1. Method for displaying virtual reality information in a vehicle (1), where a virtual reality device (3) is used by a user (2) in the interior (11) of the vehicle (1), wherein the method comprises the following steps:
i) capturing at least one first image (51) of the user's (2) environment, where the at least one first image (51) captured matches with a field of view (22) of the user (2),
ii) determining a request to represent additional information on the virtual reality device (3),
iii) generating a virtual information (101) based on the additional information to be represented,
iv) generating a virtual environment (6) of the user (2), where the virtual environment (6) comprises inserting the virtual information (101) in the at least one first image (51), and
vi) displaying the virtual environment (6) generated by the virtual reality device (3).

2. Method according to Claim 1, wherein the step of generating a virtual information (101) comprises defining at least one visual property of the virtual information (101) to be displayed on the virtual reality device (3) and/or the step of generating a virtual information (101) comprises defining the content of the virtual information (101) to be displayed on the virtual reality device (3).

3. Method according to any of the previous claims, wherein the step of generating a virtual environment (6) comprises superimposing the virtual information (101) generated on the at least one first image (51) captured.

4. Method according to Claim 3, wherein superimposing the virtual information (101) generated on the at least one first image (51) captured comprises establishing the transparency of the virtual information (101) superimposed or superimposing the virtual information (101) generated on the at least one first image (51) captured comprises defining a dimension of the virtual information (101) superimposed.

5. Method according to any of the above claims, wherein the step of generating a virtual environment (6) comprises defining a position of the virtual information (101) to be displayed on the virtual reality device (3).

6. Method according to Claim 5, wherein the virtual information (101) comprises a preset position.

7. Method according to Claim 6, wherein the method comprises furthermore a step of determining a user's (2) command (102), where defining a virtual information position (101) comprises inserting the virtual information (101) in a position requested by the user (2).

8. Method according to Claim 7, wherein the command (102) comprises a preset gesture captured in the at least one first image (51), in such a way that the position of the virtual information (101) is substantially equal to the position of the preset captured gesture in the user's (2) field of view (22).

9. Method according to any of the Claims 7 or 8, wherein the command (102) comprises at least one instruction, in such a way that the position of the virtual information (101) is displaced by the at least one instruction, where the command (102) comprises a voice instruction and/or an instruction on a touch surface and/or an instruction by gestures.

10. Method according to any of the above claims, wherein the method comprises furthermore a step of determining a critical driving situation, where the step of generating virtual information (101) and/or the step of generating a virtual environment (6) are additionally based on the critical driving situation determined.

11. Method according to any of the above claims, wherein the at least one first image (51) comprises at least one first segment (511), where the method comprises a step of classifying the at least one first segment (511) of the at least one first image (51) in:
- interior (11) of the vehicle (1),
- exterior (12) of the vehicle (1), and
- additional object (13) of the vehicle,
wherein the step of generating virtual information (101) and/or the step of generating a virtual environment (6) are additionally based on the classification of the at least a first segment (511) of the at least a first image (51).

12. Method according to Claim 11, wherein inserting the virtual information (101) generated into the at least one first image (51) captured comprises superimposing the virtual information (101) onto the first segment (511) of the interior (11) of the vehicle and/or onto the first segment (511) of the exterior (12) of the vehicle (1) and/or onto the first segment (511) of the additional object (13) of the vehicle (1).

13. Method according to any of the above claims, where the virtual information (101) comprises at least one virtual actuator (105); wherein the method comprises furthermore a step of acting on the at least one virtual actuator (105), which in turn comprises:
- determining a position of at least one hand (25) of the user (2) in the field of view (22),
- associating the position of the at least one hand (25) of the user (2) determined with the position of the at least one virtual actuator (105),
- determining a match between the position of the at least one hand (25) of the user (2) determined with the position of the at least one virtual actuator (105).

14. Method according to Claim 13, where if a match between the position of the at least one hand (25) and the virtual actuator (105) has been determined, acting on at least one virtual actuator (105) comprises generating at least one response to the user (2).

15. System for displaying virtual reality information in a vehicle (1), where the system comprises:
- a virtual reality device (3), wherein the virtual reality device (3) comprises at least one screen (37),
- at least one first camera (31), wherein the at least one first camera (31) is set to capture at least one first image (51), where the at least one first image (51) matches with the field of view (22) of the user (2),
- at least one processing unit (4), wherein the at least one processing unit (4) is configured for determining an application to represent information on the virtual reality device (3), receiving an instruction (102), generating a virtual information (101), and generating a virtual environment (6) for the user (2).
